# EUROPEAN PATENT APPLICATION

(11) **EP 0 730 903 A1**
(43) Date of publication of application: **11.09.1996**
(21) Application number: 94905267.4
(22) Date of filing: 23.11.1993
(51) Int. Cl.: B01J 20/20, B01J 23/50

(54) **POROUS COMPOUND SUBSTANCE**

(71) Applicant: INSTITUT KATALIZA IMENI G.K. BORESKOVA SIBIRSKOGO OTDELENIA ROSSIISKOI AKADEMII NAUK, Novosibirsk, 630090 (RU)
(72) Inventor: BALZHINIMAEV, Bair Sadypovich, Novosibirsk, 630128 (RU); KILDYASHEV, Sergei Petrovich, Novosibirsk, 630090 (RU); GONCHAROVA, Svetlana Nikolaevna, Novosibirsk, 630128 (RU); LIKHOLOBOV, Vladimir Alexandrovich, Novosibirsk, 630090 (RU); DUPLYAKIN, Valery Kuzmich, Omsk, 644099 (RU)
(74) Representative: Patentanwälte Zellentin & Partner
(86) International application number: RU9300283
(87) International publication number: WO9514529

(57) **Zusammenfassung**

Poröser Verbundwerkstoff, enthaltend 0,05 bis 40,00 Masse-% Silber und 60,00 bis 99,95 Masse-% einer Kohlenstoffmatrix, welche eine dreidimensionale Struktur aus graphitähnlichen Kristallen mit einem Schichtabstand von 3,36 bis 3,62 Å, Schichtabmessungen von 20 bis 2 000 Å und einer Schichtstärke von 30 bis 50 000 Å, eine spezifische Dichte von 1,8 bis 2,2 g/cm³ und eine Röntgendichte von 2,108-2,238 g/cm³ aufweist, deren Porenraum von assoziierten Kristallen begrenzt ist, die einen Krümmungsradius von 80 bis 50 000 Å aufweisen.

## Description

### Gebiet der Technik

Die vorliegende Erfindung bezieht sich auf die physikalische Chemie und betrifft insbesondere poröse Verbundwerkstoffe.

Die Erfindung wird beispielsweise bei der Herstellung von elektrischen Kontakten, als Katalysatoren in Prozessen, die durch Silber katalysiert werden, sowie als Adsorptionsmittel bei der Reinigung von beispielsweise Wasser und Blut Anwendung finden.

### Stand der Technik

Zur Zeit sind Verbundwerkstoffe bekannt, die als Wirkstoff Silber enthalten, das auf einen Träger aufgebracht ist, wobei man als Träger Siliziumdioxid, Aluminiumoxid oder Kohlenstoff verwendet.

So ist ein Verbundwerkstoff bekannt, der 1-5 Masse-% Graphit und 95-99 Masse-% Silber enthält und für die Herstellung von elektrischen Kontakten bestimmt ist, die eine sehr hohe Sicherheit gegen Festkleben zeigen, einen niedrigen und stabilen Kontaktwiderstand aufweisen, aber gegen Lichtbogenerosion unbeständig sind sowie eine niedrige Härte und Festigkeit besitzen (W.W.Malyschew, Rumjanzew, "Silber", 1987, Metallurgija, Moskau, Seite 12).

Vorbekannt ist auch ein Verbundwerkstoff, der 0,001-3 Masse-% Silber und als Träger aktive Kohle enthält (JP, A, 54-8638; Berichte der Akademie der Wissenschaften der UdSSR, Band 90, 1953, Moskau, L.Ja.Sscharkowsky u.a. "Über die katalytische Wirkung von mineralischen Zusatzstoffen", S.1071).

Ein solcher Werkstoff wird als Katalysator im Prozeß der Oxidation von Ethylenglykol zu Glyoxal und im Prozeß der Synthese von Schwefelkohlenstoff sowie für die Herstellung eines Palladiumkatalysators verwendet, der für die Vinylacetatsynthese bestimmt ist. Dieser Werkstoff ist zum Unterschied von dem oben erwähnten porös, weist aber eine niedrige chemische Beständigkeit, eine niedrige Festigkeit und eine niedrige elektrische Leitfähigkeit auf.

Vorbekannt ist ein poröser Verbundwerkstoff, enthaltend Silber als aktive Komponente in einer Menge von 0,05 bis 40 Masse-%, das auf Russ aufgebracht ist (US, A; 4689316).

Ein solcher Werkstoff eignet sich gut für die Verwendung als Katalysator der Oxidation von Propylen zu Propylenoxid, weist aber eine niedrige Festigkeit sowie eine niedrige elektrische Leitfähigkeit bei niedriger chemischer Beständigkeit auf.

Somit können alle bekannten Verbundwerkstoffe auf Silber- und Kohlenstoffbasis nicht in Prozessen verwendet werden, die in einem oxidativen Medium und unter harten Bedingungen (Temperatur, Druck) ablaufen, sowie in denjenigen Prozessen, wo eine hohe elektrische Leitfähigkeit und eine Porosität des Werkstoffs erforderlich sind.

Der Erfindung liegt die Aufgabe zugrunde, durch Änderung der Eigenschaften der Kohlenstoffmatrix - also des Trägers - einen porösen Verbundwerkstoff zu schaffen, der eine hohe elektrische Leitfähigkeit und eine hohe chemische Beständigkeit aufweist sowie katalytisch hoch wirksam ist.

Diese Aufgabe wird dadurch gelöst, daß in einem porösen Verbundwerkstoff, mit einer Kohlenstoffmatrix und Silber, die Kohlenstoffmatrix erfindungsgemäß aus dreidimensionalen graphitähnlichen Kristallen mit einem Schichtabstand von 3,36 bis 3,62 Å, Schichtmaßen von 20 bis 2 000 Å und Schichtstärken von 30 bis 50 0000 Å gebildet ist, eine spezifische Dichte von 1,8-2,2 g/cm³, eine Röntgendichte von 2,108 bis 2,238 g/cm³ aufweist, und deren Porenraum von assoziierten Kristallen umgeben ist, welche einen Krümmungsradius von 80 bis 50 000 Å aufweisen, wobei der Werkstoff 60,00 bis 99,95 Masse-% der erwähnten Kohlenstoffmatrix und 0,05 bis 40,00 Masse-% Silber enthält.

Ein solcher poröser Verbundwerkstoff weist eine Porosität von 0,01 bis 1,20 cm³/g auf, seine spezifische elektrische Leitfähigkeit beträgt 0,2 bis 5,0 Ω⁻¹ cm⁻¹, die spezifische Oberfläche ist gleich 0,1 bis 600,0 m²/g, die Abriebfestigkeit beträgt 0,01 bis 0,30 %/min., die Druckfestigkeit im Kugelversuch beträgt 10 bis 600 kg/cm².

Erfindungsgemäß ist es von Vorteil, daß der Werkstoff zusätzlich Rubidium und/oder Cäsium in einer Menge von 1 bis 10 000 ppm enthält, welche als bekannte Promotoren in Silberkatalysatoren eingeführt werden, die für eine Reihe von Oxidationsprozessen verwendet werden.

Weitere Ziele und Vorteile der vorliegenden Erfindung werden in der nachfolgenden ausführlichen Beschreibung des porösen Verbundwerkstoffes und an konkreten Beispielen für diesen Werkstoff und dessen Verwendung erklärt.

### Ausführung der Erfindung

Der erfindungsgemäße poröse Verbundwerkstoff enthält metallisches Silber als aktive Komponente und eine Kohlenstoffmatrix, deren Textur aus graphitähnlichen Kristallen mit einem Schichtabstand von 3,36 bis 3,62 Å, Schichtmaßen von 20 bis 2 000 Å und Schichtstärken von 30 bis 50 000 Å besteht, dabei bilden die Kristalle eine dreidimensionale Matrix; die eine spezifische Dichte von 1,8 bis 2,2 g/cm³, eine Röntgendichte von 2,108 bis 2,238 g/cm² aufweist, deren Porenraum von assoziierten Kristallen gebildet ist, die einen Krümmungsradius von 80 bis 50 000 Å aufweisen.

Die erwähnte Kohlenstoffmatrix stellt man nach bekannter Methodik durch Erwärmung von Metallteilchen und deren Oxiden oder Ruß bei Temperaturen von 600 bis 1200°C im Kohlenwasserstoffstrom und anschließender Behandlung der gebildeten Matrix mit einer wasserdampfhaltigen oxidierenden Atmosphäre her.

Die Einführung von Silber in die oben beschriebene Kohlenstoffmatrix erfolgt unter Verwendung von Silbersalzen oder -komplexen nach bekannten Methoden, und zwar
a) durch Tränken; stufenweises Tränken;
b) durch Auftrag aus Kolloidlösungen;
c) durch Verspritzen;
her.
Die Reduktion zu metallischem Silber wird mit Wasserstoff oder mit flüssigen Reduktionsmitteln oder durch elektrochemische Abscheidung durchgeführt. Als Ausgangsverbindungen von Silber verwendet man beispielsweise: Silbernitrat, Silbercarbonat, Silberacetat, Silberlactat, Silberoxalat, Silbercitrat, Silberglycolat. Es ist möglich als Komplexbildner beispielsweise Ammoniak, Mono- und Diethanolamine und deren Gemische zu verwenden.

Erfindungsgemäß enthält der poröse Verbundwerkstoff 0,05 bis 40,00 Masse-% Silber und 60,00 bis 99,95 Masse-% der erwähnten Kohlenstoffmatrix. Bei einem Silbergehalt von weniger als 0,05 Masse-% im erfindungsgemäßen Werkstoff übt das Silber auf die Eigenschaften und Charakteristiken des Verbundwerkstoffes praktisch keinen Einfluß aus. Das Uberschreiten eines Silbergehaltes über 40-Masse-% ist nicht zweckmäßig, denn dies führt nicht zur Erhöhung der physikalischchemischen Werte des erfindungsgemäßen Werkstoffes.

Somit kann mit der Wahl der Kohlenstoffmatrix der angegebenen Struktur mit den angeführten Charakteristiken und mit dem experimentell ermittelten Verhältnis der genannten Komponenten ein silberhaltiger poröser Verbundwerkstoff erhalten werden, der folgende physikalisch-chemische Charakteristiken aufweist:

| | |
|---|---|
| Porosität, cm³/g | 0,01-1,2 |
| Druckfestiqkeit im Kugelversuch, kg/cm² | 10-600 |
| Abriebfestigkeit, %/min | 0,01-0,3 |
| Innenporengröße Å | 50-50000 |
| spezifische Oberfläche, m²/g spezifische elektrische | 0,1-600 |
| Leitfähigkeit, Ω⁻¹ cm⁻¹ | 0,2-5 |

Die angegebenen physikalisch-chemischen Charakteristiken des erfindungsgemäßen Werkstoffes bleiben erhalten und verbessern sich sogar bei einem zusätzlichen Gehalt an Rubidium und/oder Cäsium im Verbundwerkstoff in einer Menge von 1 bis 10 000 ppm, also von Metallen, die als bekannte promotierende Zusatzstoffe Silber zugesetzt werden, welches als Katalysator in einer Reihe von Oxidationsprozessen verwendet wird.

Als Ausgangsverbindungen der erwähnten Alkalimetalle - Rubidium und Cäsium - bei deren Einführung in den erfindungsgemäßen Werkstoff kommen Verbindungen dieser Metalle, wie beispielsweise: Cäsiumnitrat und Cäsiumcarbonat zum Einsatz. Die Verbindungen der Alkalimetalle werden durch Tränken und anschließende Trocknung der Kohlenstoff-Silber-Komposition oder durch gemeinsames Tränken der Kohlenstoffmatrix mit Silbersalzen eingeführt.

Je nach der Zweckbestimmung kann der erfindungsgemäße poröse Verbundwerkstoff ein Pulver mit einer Partikelgröße von 1 bis 200 µm oder Körner sphärischer Form mit einer Korngröße von 0,2 bis 5 mm oder Zylinder, Röhrchen, Ringe, Drei- und Vierblätterkörper mit einem Durchmesser-zu-Länge-Verhältnis von 2:1 bis 1:4 sowie Blöcke von Wabenstruktur mit einem Durchmesser von 10 bis 50 mm und einer Länge von 10 bis 200 mm sein, wobei die Waben eine Größe von 0,3 bis 3 mm und eine Wanddicke von 0,5 bis 2 mm aufweisen.

Zum besseren Verständnis der vorliegenden Erfindung werden nachfolgend Ausführungsbeispiele angeführt.

### Beispiel 1.

100 g technischer Kohlenstoff werden in einen Reaktor eingefüllt. Der Reaktor wird auf 900°C aufgeheizt; in diesen wird 5 Stunden lang ein Propan-Butan-Gemisch eingeführt, das 50 Masse-% Butan enthält. Es werden 1-2 mm große Kohlenstoffkörner erhalten, welche eine Kohlenstoffmatrix darstellen, die eine dreidimensionale Struktur hat, gebildet aus Teilchen sphäroidaler Form mit einem Krümmungsradius von 500-800 Å und zusammengesetzt aus Kristallen mit einer Grösse von (45-68 Å) x (45-68 Å) x (54-86 Å), die einen Schichtabstand von 3,42 Å haben. Die spezifische Dichte des hergestellten Kohlenstoffes beträgt 1,95 g/cm³, die Röntgendichte beträgt 2,182 g/cm³, die Porosität ist gleich 0,62 cm³/g, die spezifische Oberfläche ist 240 m²/g.

Zu 100 g der auf solche Weise erhaltenen Kohlenstoffkörner werden 60 ml einer 20%-igen wässrigen Silbernitratlösung zugegossen und in einem geneigten rotierenden Glaskolben 20 Minuten lang vermischt. Danach wird die Kohlenstoffmatrix mit der absorbierten Lösung im Heißluftstrom getrocknet und im Stickstoffstrom bei einer Temperatur von 260°C zwei Stunden lang geglüht. Dann wird mit Wasserstoff bei 300°C im Laufe einer Stunde behandelt. Nach der Kühlung im Stickstoffstrom erhält man einen porösen Verbundwerkstoff, der 6,9 Masse-% Silber enthält und folgende Charakteristiken aufweist:

| | |
|---|---|
| Porosität | 0,54 cm³/g |
| Druckfestigkeit | 85 kg/cm² |
| Abriebfestigkeit | 0,15 %/min |
| Innenporengröße | 420 Å |
| Spezifische Oberfläche Spezifische elektrische | 180 m²/g |
| Leitfähigkeit | 3,8 Ω⁻¹ cm⁻¹ |

### Beispiel 2.

Eine Kohlenstoffmatrix in Form eines Kohlenstoffblocks erhält man unter den Verhältnissen, die denen im Beispiel 1 angegebenen ähnlich sind, indem die Matrix aus Ruß vorgeformt wird.

Der erhaltene Kohlenstoffblock mit einem Durchmesser von 25 mm, einer Höhe von 30 mm, einer quadratischen Zellengröße von 1x1 mm, einer Zellenwanddicke von 0,6 mm, einer Porosität von 0,32 cm³/g und einer spezifischen Oberfläche von 21 m²/g, der von Teilchen sphäroidaler Form mit einem Krümmungsradius von 80 bis 300 Å und 800 bis 2500 Å geformt ist, welche aus Kristallen mit einer Größe (20-45 Å) x (20-45 Å) x (30-120 Å) und einem Schichtabstand von 3,39 Å zusammengesetzt sind und der eine spezifische Dichte von 2,05 g/cm³ und eine Röntgendichte von 2,190 g/cm³ hat, wird in 40 ml ammoniakalischem Silbernitrokomplex (800 mg Silber) untergebracht. Der Block wird an eine Gleichstromquelle (Katode) angeschlossen; als Anode dient eine Platinelektrode. Bei einer Spannung von 0,8 V stellt sich im System ein Strom von 1,8 A ein. Nach einer Stunde wird der Kohlenstoffblock von der Stromquelle abgeschaltet, mit Wasser gewaschen und im Heissluftstrom getrocknet. Der Silbergehalt in dem erhaltenen porösen Verbundwerkstoff beträgt 38 Gew.%.

### Beispiel 3.

0,36 g Silbernitrat werden in 1,68 g Wasser aufgelöst und unter Kühlung werden dazu 0,54 ml Ethanolamin langsam zugegeben. Das Silbernitrat bildet mit dem Ethanolamin ein Komplexsalz. Die farblose wässrige Lösung dieses Komplexes wird zu 4,8 g der Kohlenstoffmatrix zugegeben, die unter den Verhältnissen erhalten ist, die denen im Beispiel 1 angegebenen ähnlich sind. Die Kohlenstoffmatrix hat die Form 1-2 mm großer sphärischer Körner und eine spezifische Oberfläche von 13,8 m³/g. Die Trocknung der mit der erwähnten Lösung durchtränkten Kohlenstoffmatrix erfolgt gleichzeitig mit der Reduktion zu metallischem Silber im Vakuumrotationsverfahren bei einer Temperatur von 90°C.

Nach der Reduktion wird der erhaltene Verbundwerkstoff mit Wasser gewaschen und in Luft bei 240°C ausgeglüht. Der Silbergehalt des erhaltenen porösen Verbundwerkstoffs beträgt 1,5 Masse-%.

### Beispiel 4.

Zu 6,6 g des porösen Verbundwerkstoffes, der unter den Verhältnissen erhalten ist, die den im Beispiel 3 angegebenen ähnlich sind, wird unter Rühren ein ammoniakalischer Silbernitratkomplex (3,5 g Silbernitrat werden in 2 ml Wasser aufgelöst und 5 ml Ammoniak zugegeben) zugemischt. Die weitere Trocknung, Ausglühung und Behandlung des Werkstoffes erfolgen unter den Verhältnissen, die den im Beispiel 3 angegebenen ähnlich sind.

Es wird ein poröser Verbundwerkstoff erhalten, der 20 Masse-% Silber enthält.

### Beispiel 5.

Zu 6,0 g eines nach Beispiel 4 erhaltenen porösen Verbundwerkstoffes wird ein Komplex aus Silbernitrat und Ammoniak (3,5 g Silbernitrat, 2 ml Wasser und 5 ml Ammoniak) zugegossen. Die nachfolgenden Operationen erfolgen unter den Verhältnissen, die den im Beispiel 3 angegebenen ähnlich sind.

Der erhaltene Verbundwerkstoff enthält 40 Masse-% Silber.

### Beispiel 6.

Zu 5 g eines nach Beispiel 4 erhaltenen porösen Verbundwerkstoffes, werden 2 ml einer Cäsiumnitrat-Lösung mit einer Konzentration von 0,005 g Cs/ml zugegossen. Die Probe wird im Vakuumrotationsverfahren bei 90°C getrocknet; dann wird sie an der Luft bei 240°C ausgeglüht.

Der Cäsiumgehalt des porösen Verbundwerkstoffes beträgt 0,15 Masse-% (1500 ppm).

### Beispiel 7.

Zu 10 g eines nach Beispiel 3 erhaltenen porösen Verbundwerkstoffes wird 1 ml einer Cäsiumhydroxid-Lösung mit einer Konzentration von 0,0005 g Cs/ml zugegossen. Die Probe wird im Vakuumrotationsverfahren bei 90°C getrocknet; dann wird an der Luft bei 240°C ausgeglüht. Der Cäsiumgehalt des porösen Verbundwerkstoffes beträgt 0,01 Masse-% (100 ppm).

### Beispiel 8.

10 g eines nach Beispiel 1 erhaltenen porösen Verbundwerkstoffes werden in einer Reaktion der Oxidation von Acetaldehyd zu Essigsäure geprüft. Ein Luft-Dampf-Gemisch, das 3,2 Vol.-% Acetaldehyd enthält, wird durch eine Schicht des zu prüfenden porösen Verbundwerkstoffes bei einer Temperatur von 160°C und einem Druck von 1 atm. durchgelassen. Bei einer Kontaktzeit von 5 sec⁻¹ beträgt die Umwandlung 32%. Ein oxidativer Abbau des zu prüfenden Verbundwerkstoffes ist nicht festzustellen.

### Beispiel 9. Auf einen nach Beispiel 1 erhaltenen porösen Verbundwerkstoff in einer Menge von 10 g wird Palladium in einer Menge von 5 Masse-% aufgetragen.

Dann wird dieser Verbundwerkstoff in einer Reaktion der m-Nitrobenzotrifluorid-Hydrierung geprüft. Bei einem Wasserstoffdruck von 20 atm. und einer Temperatur von 80°C betrug die Aktivität des Kontaktes 0,12 g-mol H₂/g.min., wobei die Selektivität der m-Aminobenzoltrifluorid-Bildung bei 99,9% lag. Ein reduktiver Abbau des zu prüfenden Verbundwerkstoffes ist dabei nicht zu beobachten.

### Beispiel 10.

Man prüft einen nach Beispiel 1 erhaltenen porösen Verbundwerkstoff in einer Zersetzungsreaktion von 30%-igem Wasserstoffperoxid. 20 ml Perhydrol® wurden (unter adiabatischen Erwärmungsbedingungen) zu 99,8% in 8,3 Minuten an einem Gramm des zu prüfenden Verbundwerkstoffes zersetzt. Ein oxidativer Abbau des zu prüfenden Werkstoffes ist nicht zu beobachten.

### Beispiel 11.

Ein poröser nach Beispiel 2 erhaltener Verbundwerkstoff wird in einer Reaktion des oxidativen Abbaus von Hydroxialdehyden geprüft. Durch den porösen Verbundwerkstoff, der sich in einem Reaktor mit eingebauter Lufteinblasvorrichtung befindet, wird eine 10⁻³ %-ige Glycolaldehydlösung durchgelassen. Bei 90°C werden in zwei Stunden 2 Liter der erwähnten Lösung durch den porösen Verbundwerkstoff durchgelassen. Die Konzentration der Verunreinigungen war um ein 12-faches niedriger. Ein oxidativer Abbau des porösen Verbundwerkstoffes ist nicht zu beobachten.

### Beispiel 12.

4,2 g eines nach Beispiel 3 erhaltenen porösen Verbundwerkstoffes werden in einen Quarzreaktor eingefüllt. Das Reaktionsgemisch, das 2 Vol.% Ethylen, 7 Vol.% Sauerstoff und 91 Vol.% Stickstoff enthält, wird durch den zu prüfenden Verbundwerkstoff bei einer Temperatur von 200-300°C und einem Druck von 1 atm. im Kreislauf durchgelassen. Bei einer Strömungsgeschwindigkeit von 7,8 l/Stunde, einer Temperatur von 300°C und einem Umsatz an Ethylen von 5% beträgt die Selektivität, bezogen auf Ethylenoxid, 34%.

### Beispiel 13.

0,7 g eines nach Beispiel 4 erhalten porösen Verbundwerkstoffes werden in einen Quarzreaktor eingefüllt. Das Reaktionsgemisch, das 2 Vol.% Ethylen, 7 Vol.% Sauerstoff und 91 Vol.% Stickstoff enthält, wird durch den zu prüfenden Verbundwerkstoff bei einer Temperatur von 180 bis 250°C und einem Druck von 1 atm. im Kreislauf durchgelassen. Bei einer Strömungsgeschwindigkeit von 18,3 l/Stunde, einer Temperatur von 230°C und einem Ethylenumsatz von 25% beträgt die Selektivität der Bildung von Ethylenoxid 68%.

## Patentansprüche

1. Poröser Verbundwerkstoff mit einer Kohlenstoffmatrix und Silber,
dadurch gekennzeichnet, daß
die Kohlenstoffmatrix eine dreidimensionale Struktur hat und von graphitähnlichen Kristallen mit einem Schichtabstand von 3,36 bis 3,62 Å, Schichtabmessungen von 20 bis 2 000 Å und Schichtstärken von 30 bis 50 000 Å gebildet ist, eine spezifische Dichte von 1,8 bis 2,2 g/cm³ und eine Röntgendichte von 2,108-2,238 g/cm³ aufweist, und deren Porenraum von assoziierten Kristallen begrenzt ist, die einen Krümmungsradius von 80 bis 50 000 Å aufweisen, wobei der Werkstoff 60,00 bis 99,95 Masse-% der genannten Kohlenstoffmatrix und 0,05 bis 40,00 Masse-% Silber enthält.

2. Poröser Verbundwerkstoff nach Anspruch 1,
dadurch gekennzeichnet, daß
er zusätzlich Rubidium und/oder Cäsium in einer Menge von 1 bis 10 000 ppm enthält.
